# EUROPEAN PATENT APPLICATION

(11) **EP 4 653 932 A1**
(43) Date of publication of application: **26.11.2025**
(21) Application number: 24215612.3
(22) Date of filing: 26.11.2024
(51) Int. Cl.: G02B 21/00, G02B 27/58

(54) **BROADBAND ULTRAFAST MICROSCOPE**

(30) Priority: 26.11.2023 PL 44684423
(71) Applicant: Ensemble3 spolka z ograniczona odpowiedzialnoscia, 01-919 Warszawa (PL)
(72) Inventor: Reza Darabian, Hamid, 01-466 Warszawa (PL); Das, Gourmohan, 01-919 Warszawa (PL); Postava Vresinska, Kamil, 742-83 Klimkovice (CZ); Razdolskiy, Ilya, 01-919 Warszawa (PL); Pawlak, Dorota Anna, 01-885 Warszawa (PL)
(74) Representative: JD&P Patent Attorneys Joanna Dargiewicz & Partners

(57) **Abstract**

The object of the invention is a super resolution broadband ultrafast microscope built with an optical table, Ti:sapphire laser oscillator and amplifier, optical components, lens, mirror, polarizers, beam splitters, optical parametric amplification system including: TOPAS, NIRUVIS and non-colinear differential frequency generator (NDFG), Teledyne PyLoN-IR camera system, telescope system, beam absorbers and attenuators, spectrograph, translational linear stage, accessories and controller, Labview module and computer control of the experiment, Compact CCD, light source, super resolution objective, piezoelectric lens holder, two Thorlabs photodiodes: DET10D2 and DET36A2, lock-in amplifier and optical chopper, spectrograph, CCD PIXIS: 100BR, Teledyne PyLoN-IR camera system, non-linear crystal (BIBO), autocorrelator, wherein the oscillator is a femtosecond oscillator whose beam is divided into two beams with a relative intensity of 70:30, furthermore the microscope is equipped with a super-resolution objective generating photonic nanojet through a microsphere inside the objective, the motorised translational linear stage creates the optical delay between pump and probe beams.

## Description

The object of the invention is to develop a super-resolution broadband ultrafast microscopy technique to study the dynamics of optical and electronic properties of materials with high spatial and spectral resolution on extremely short time scales. Imaging excited state dynamics in complex materials provides an important avenue for understanding the role played by micro- and nanoscale structural and compositional heterogeneity in the performance of active electronic and optoelectronic devices.

In particular, the ultrafast dynamics of photo-excited carriers is a popular and important research topic in photonics, optoelectronics and photochemistry. One-box solution lasers provide pulse durations in the order of tens of femtoseconds, enabling us, for example, to study electron-electron and electron- phonon interactions in metals and semiconductors. In addition, the use of non-linear optical components ensures a wavelength tuning over a wide range from UV to mid-infrared. This capability allows us to study the system at different energy levels. Simultaneous nanometre spatial resolution and femtosecond temporal resolution provide detailed, structurally correlated insights into intramolecular transitions, free carrier transport, surface plasmon propagation, unique interfacial states and even the study of single molecule systems that are inaccessible to conventional spectroscopes or microscopes. This is usually available by introducing a microscopic approach, but the limitation of diffraction is a barrier to increasing spatial resolution. To date, various strategies have been used to overcome the diffraction limit. For example, the scanning probe (near-field) technique in combination with a femtosecond laser, and the combination of an ultrafast technique with an electron microscope. In both cases, the main drawbacks are the complexity and high cost of implementation.

A prototype of an advanced and flexible instrument for studying ultrafast photoexcitation dynamics in heterogeneous systems, including but not limited to granular layers and alloys, metallic and semi-metallic multilayers, magnetic domains, eutectic materials, plasmonic glasses and heterostructures, as well as polaritonic metasurfaces, has been realised. A key advantage of the prototype is its unique combination of high temporal, spectral and spatial resolution, making it an attractive tool for researchers in a wide range of fields, from nanophotonics to photochemistry.

The aim of the invention was to create a microscope relying on the interaction of ultrashort pulses with a plasmonically-assisted super-resolution objective. Achieving super-resolution and overcoming the diffraction limit of ordinary microscopic systems and the pump-probe microscopic technique are the most original aspects of the prototype with a wide range of applications. At the same time, the system makes it possible to obtain the spectral and polarisation dependence of the measured dynamic response.

The essence of the invention is a broadband ultrafast microscope built with an optical table, Ti:sapphire laser oscillator and amplifier, optical components, lens, mirror, polarizers, beam splitters, optical parametric amplification system including: TOPAS, NIRUVIS and non-colinear differential frequency generator (NDFG), Teledyne PyLoN-IR camera system, telescope system, beam absorbers and attenuators, spectrograph, translational linear stage, accessories and controller, Labview module and computer to control the experiment, Compact CCD, light source super resolution objective, piezoelectric lens holder, two Thorlabs photodiodes: DET10D2 and DET36A2, lock-in amplifier and optical chopper, spectrograph, CCD PIXIS: 100BR, Teledyne PyLoN-IR camera system, non-linear crystal (BIBO), autocorrelator, characterised in that the oscillator is a femtosecond oscillator whose beam is divided into two beams with a relative intensity of 70:30, furthermore the microscope is equipped with a super-resolution objective generating photonic nanojet through a microsphere inside the objective and the motorised translational linear stage creates the optical delay between pump and probe beams

In one embodiment, the microscope comprises at least one PyLoN-IR infrared camera and at least one PIXIS:100BR digital CCD camera.

In one embodiment, the optical chopper can be replaced by electro-optical modulators or acousto-optical modulators.

In one embodiment, the Lock-in amplifier, can be combined with or replaced by a BOXCAR unit for the signal amplification process depending on the laser repetition rate and the modulation frequency of the pump beam.

The invention is shown in the manufacturing examples and in the drawing in which
Fig. 1 shows a schematic of the system mounted on an optical table. BS: Beam Splitter, M: Mirror, FM: Flip Mirror, BC: Beam Combiner.
Fig. 2 shows a schematic of the mechanism of the super-resolution lens, a schematic of the photonic nanojet generation by the microsphere, the focal distance is determined by the refractive index of the microsphere,

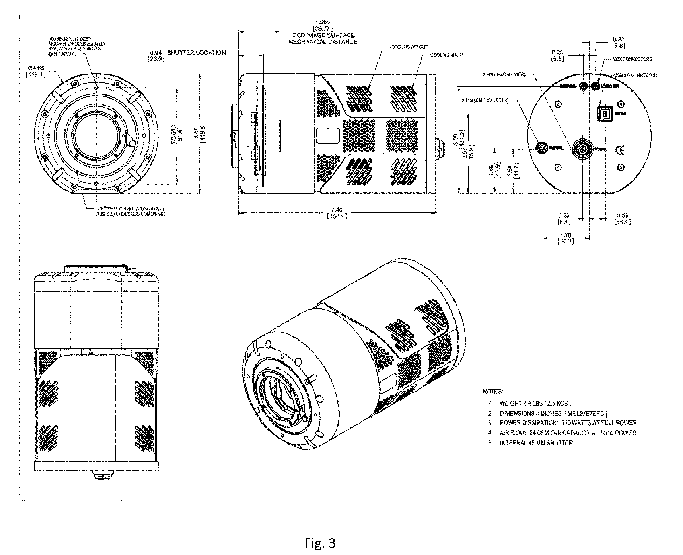

Fig. 3 shows the construction of the UV VIS camera, PIXIS: 100BR, All dimensions are given in mm;

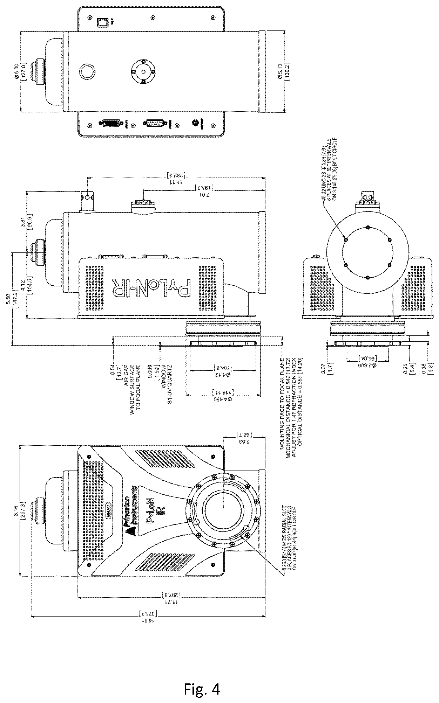

Fig. 4 shows the construction of (a) the PyLoN IR camera and its (b) controller, All dimensions are given in mm;

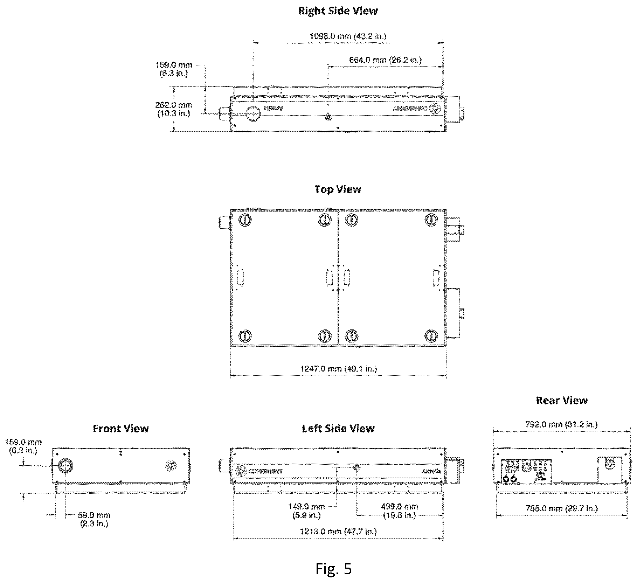

Fig. 5 shows the femtosecond laser from Coherent, model: Astrella;

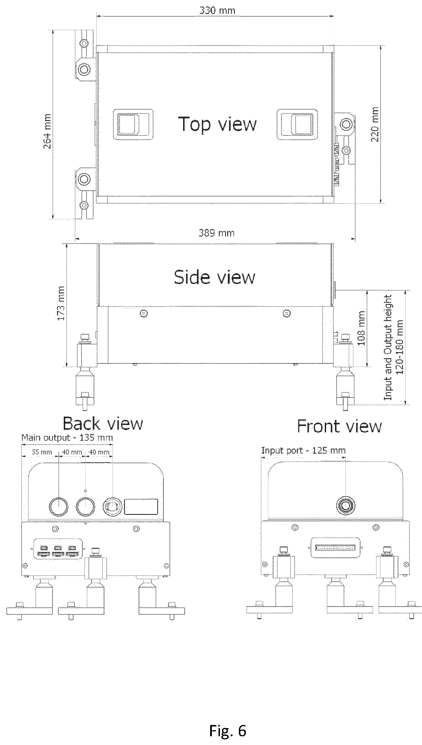

Fig. 6 shows the enclosure dimensions and positions of the NDFG input and output ports;

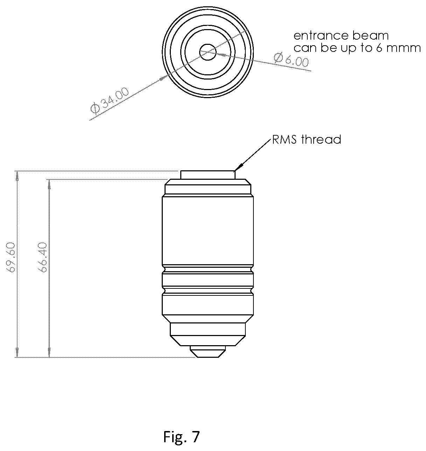

Fig. 7 shows the super-resolution lens, SMAL Air Lens, LIG Nanowise, All dimensions are given in mm;

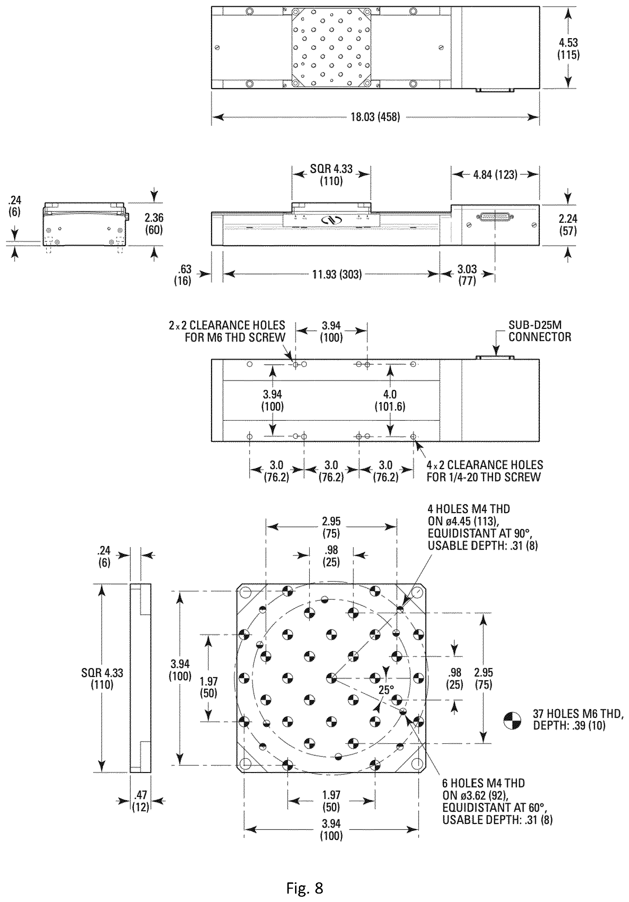

Fig. 8 shows the translational line table, M ILS150BPP, Newport,;

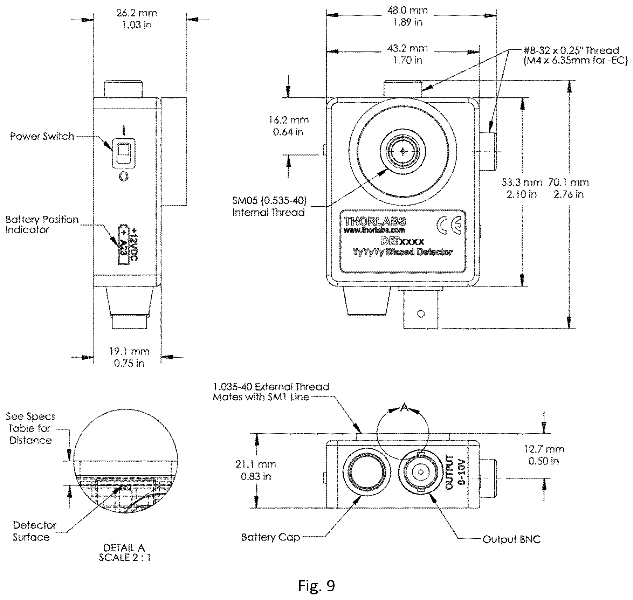

Fig. 9 shows the detector, DET10A2, Thorlabs;

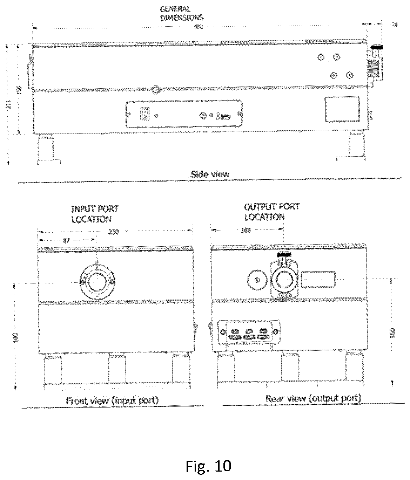

Fig. 10 shows the TOPAS Prime enclosure dimensions and the position of the input and output ports. All dimensions are given in mm;

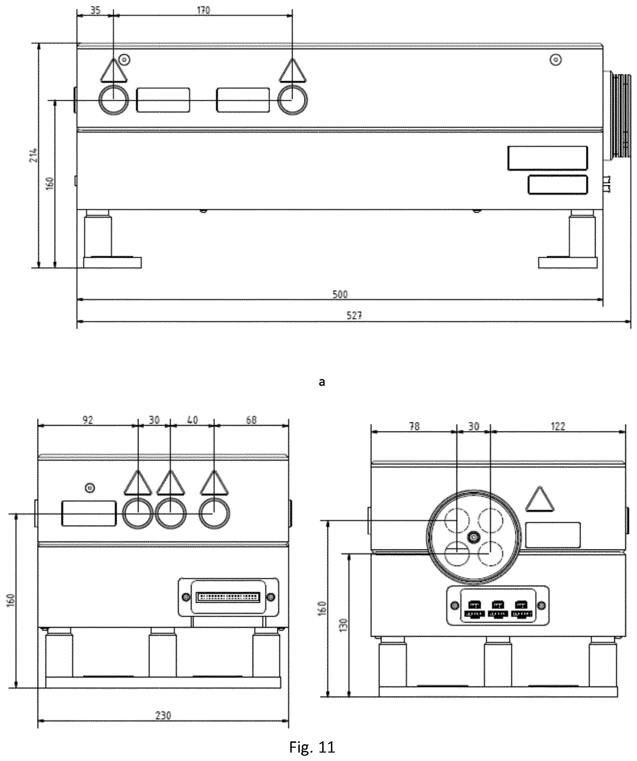

Fig. 11 shows the NirUVis housing and output ports: a) side view, b) front view, c) rear view, All dimensions are given in mm.

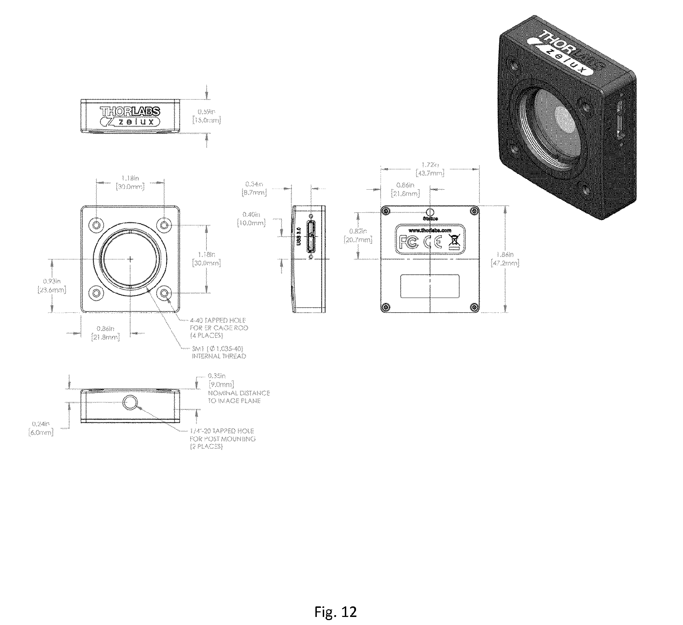

Fig. 12 shows an image and mechanical drawing of the scientific camera for microscopic imaging, Zelux, Thorlabs;

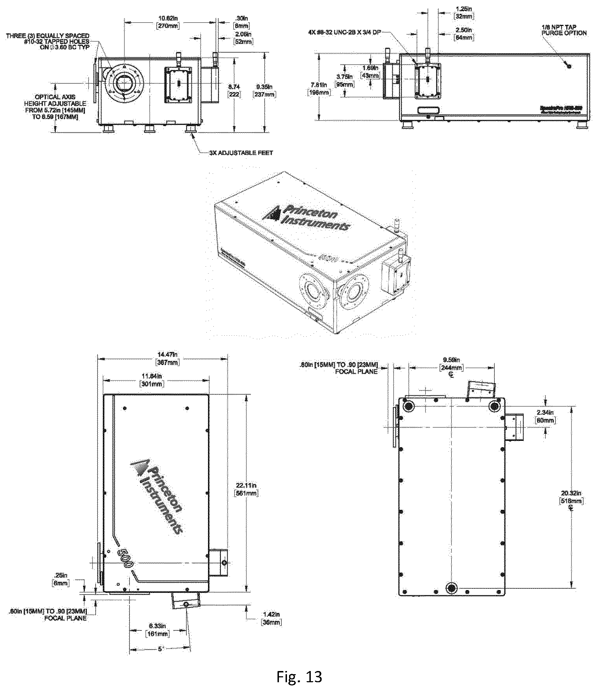

Fig. 13 shows a mechanical drawing of the HRS-500 spectrograph, Princeton Instrument, Teledyne;

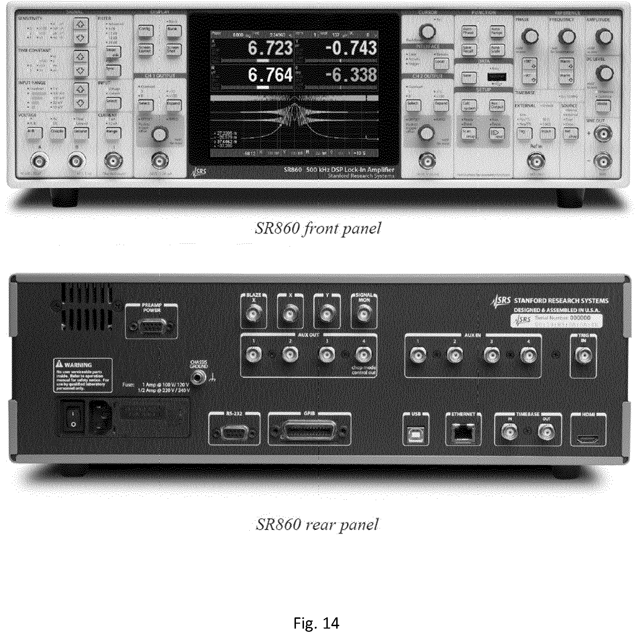

Fig. 14 shows a picture of the Lock-in amplifier, SR860, Stanford Research Systems;

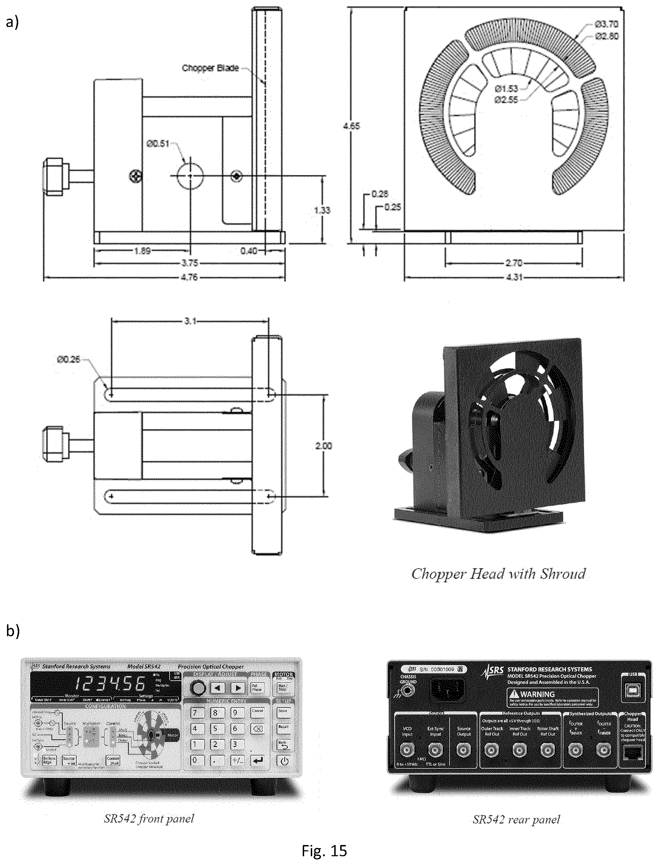

Fig. 15 shows (a) a mechanical drawing and picture of the chopper head and (b) pictures of the chopper controller.

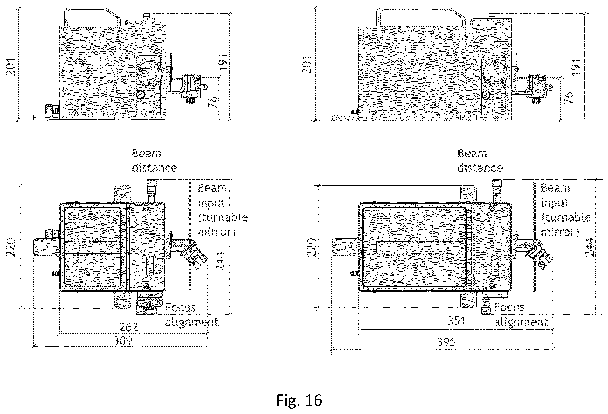

Fig. 16 shows a mechanical drawing of the autocorrelator, Pulse check NX, APE. All dimensions are given in mm.

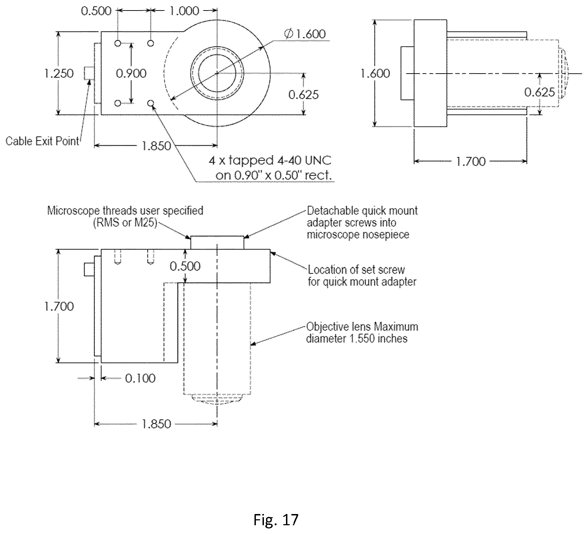

Fig. 17 shows a mechanical drawing of the piezoelectric lens holder with nanometre precision

The list of main components used in the microscope is as follows:
1 Standa optical table
2 Femtosecond Ti:sapphire laser oscillator and amplifier (Coherent model Astrella)
3 beam splitters
4 Optical parametric amplifer system, including: TOPAS, NIRUVIS and non-colinear differential frequency generator (NDFG);
5 telescope system,
6 Beam absorbers and attenuators
7 Translational linear stage, accessories and controller
8 Labview modules and computer control of the experiment
9 Compact CCD
10 light source;
11 Super-resolution objective;
12 Piezoelectric lens holder;
13 Thorlabs photodiodes: DET10D2
14 Thorlabs photodiodes DET36A2;
15 Optical chopper;
16 Spectrograph and monochromator;
17 CCD PIXIS:100BR;
18 Teledyne PyLoN IR camera system;
19 Non-linear crystal (BIBO);
20 Autocorrelator.

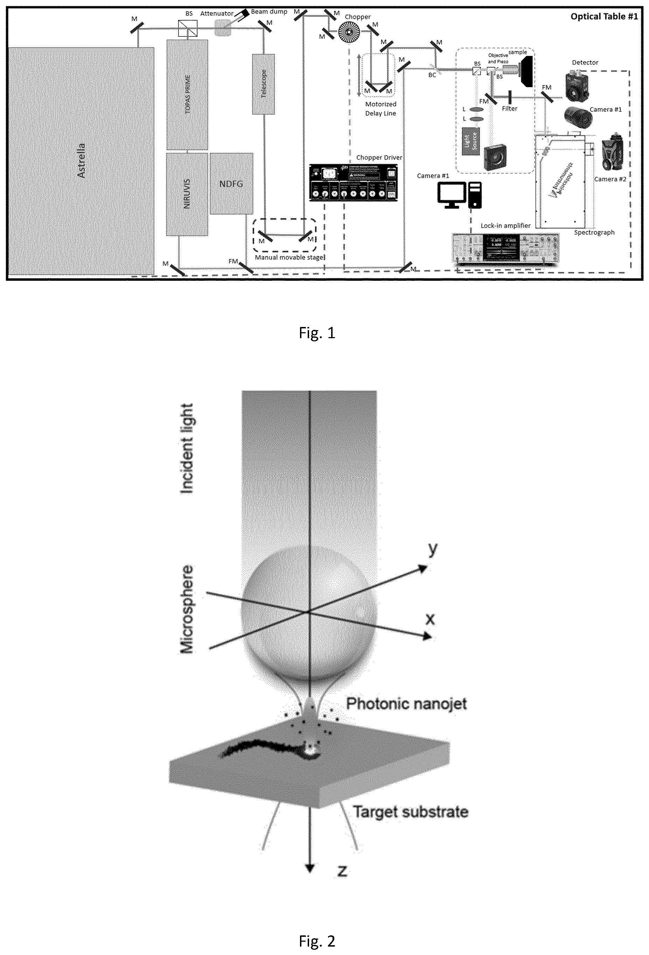

In the microscope, as shown in Fig. 1, the pump wavelength is fixed at 800 nm and the probe will be generated by an optical parametric amplifier (OPA) (TOPAS+NIRUVIS+NDFG) and covers a wide wavelength range from 290 nm to 15000 nm. The laser beam from Astrella is split into two beams with a relative intensity of 70:30. The stronger beam is used as the source of the OPA system and the second beam is used as a probe directly in the pump-probe system. The intensity of the probe beam is controlled by a beam attenuator and unused power is absorbed by the beam dump. To modify the beam size, a telescopic system was used to reduce the beam to 5 mm. The OPA itself has a similar spot size. To control the optical path of the pump beam, several mirrors were used specifically to compensate for the long optical path of the probe beam propagating inside the OPA system. In addition, a motorised translational linear stage will be used to introduce a controlled delay time between the pump beam and the probe beam. This stage facilitates adjustment of the optical path of the pump beam, allowing the desired delay time to be precisely generated. The motorised stage is controlled by the Labview software. The pump and probe beams will then be directed into the microscope system.

The temporal resolution in ultrafast spectroscopy is usually limited by the temporal pulse of the laser (pump or probe) or the minimum distance achievable by the translation stage to generate time delays between pump and probe. In the microscope according to the invention, the determining factor is the pulse duration, specifically set at 35 femtoseconds. On the other hand, the ultrashort pulses exhibit a relatively broad frequency spectrum, covering approximately 100 nanometres. To integrate spatial resolution with ultrafast spectroscopy, we extended the above-mentioned configuration with a customised microscope. This system incorporates a super-resolution objective (SMAL air (Dry) Nikon by LIG Nanowise) with 200x magnification to achieve spatial resolution of tens of nanometres. Due to the extreme sensitivity of the objective, a piezo-driven nano positioner will be used to adjust the position of the focal point to find the sharpest image of the sample.

The pump and probe beams are focused on a specific point of the sample, and then the reflection of the probe beam will be recorded as a signal. Two measurement modes are provided for the detection system. One is based on a single-channel detector, which is connected to a lock-in amplifier. The reference signal of the lock-in amplifier is derived from the repetition rate of the Astrell laser directly at 1 kHz. Modulation with other frequencies is possible with an optical chopper depending on the system response. The amplified signal is recorded by a computer using Labview software. Second detection method is possible by sending the probe to the spectrograph and recording the signals through cameras depending on the wavelength. Two cameras are connected to the spectrograph to cover a wide range from UV to infrared.

### Calibration process:

### 1- Finding the zero-delay time between the pump and probe beams:

Determining the zero-delay time between the pump and probe is crucial for accurate data analysis. To do this, we use non-linear optics, directing the pump and probe beams to a non-linear crystal (specifically the BIBO crystal) in a non-linear configuration to generate a second harmonic beam. When the two beams reach the crystal simultaneously and meet the phase-matching conditions, including the polarisation and relative direction of the incident beam to the crystal axis, they generate a third beam with a frequency twice that of the incident beam.

### 2- Adjustment of the appropriate pumping and probing beam power:

Due to the high intensity of the optical beams inside the super-resolution lens, it is extremely important to adjust the intensity of the optical beams with adjustable beam attenuators so that the beams do not damage the lens optics and generate parasitic non-linear effects such as non-linear beam distortion or air plasma generation.

### 3- Pulse probe beam focusing and super-resolution lens adjustment:

To obtain a sharp image and local sensitivity beyond the diffraction limit, the probe pulse beam is focused using an ultra-precise lens piezo. In our experience, the focusing procedure has a key impact on the overall measurement performance.

### 4 - Influence of the super-resolution lens on pulse shape and pulse duration:

One of the distinctive features of the invention is the use of the super-resolution lens in ultrafast microscopy with ultrashort pulses. The mechanism of the super-resolution objective is based on the generation of plasmonic nanojet by a microsphere inside the objective. However, the microsphere can change the shape of the pulse in the time and frequency domain. Therefore, it is extremely important to monitor the pulse shape for each wavelength passing through the lens. The monitoring procedure is carried out using an autocorrelator that measures the pulse duration and frequency distribution.

A silver mirror is used as the sample with the lowest group delay dispersion (GDD), commercially known as ultrafast mirrors. The reflection from the mirror surface is directed to an autocorrelator to measure pulse duration and spectrum shape.

## Claims

1. A super resolution broadband ultrafast microscope built with an optical table (1), Ti:sapphire laser oscillator and amplifier (2), optical components : lens, mirror, polarizers, beam splitters (3), optical parametric amplification system including: TOPAS, NIRUVIS and non-colinear differential frequency generator (NDFG) (4), Teledyne PyLoN-IR camera system (18), telescope system (5), beam absorbers and attenuators (6), spectrograph, translational linear stage, accessories and controller (7), Labview module and computer control of the experiment (8), Compact CCD (9), light source (10), super resolution objective(11), piezoelectric lens holder (12), two Thorlabs photodiodes: DET10D2 (13) and DET36A2 (14), lock-in amplifier and optical chopper (15), spectrograph (16), CCD PIXIS: 100BR (17), Teledyne PyLoN-IR camera system(18), non-linear crystal (BIBO) (19), autocorrelator (20), **characterised in that** the oscillator is a femtosecond oscillator whose beam is divided into two beams with a relative intensity of 70:30, furthermore the microscope is equipped with a super-resolution objective (11) generating photonic nanojet through a microsphere inside the lens and the motorised translational linear stage creates the optical delay between pump and probe beams

2. The microscope according to claim 1, **characterised in that** it comprises at least one PyLoN-IR infrared camera and at least one PIXIS:100BR digital CCD camera.

3. The microscope according to claim 1, **characterised in that** the optical chopper can be replaced by electro-optical modulators or acousto-optical modulators.

4. The microscope according to claim 1, **characterised in that** the Lock-in amplifier, can be combined with or replaced by a BOXCAR unit for the signal amplification process depending on the laser repetition rate and the modulation frequency of the pumping beam.
